# FASCICULE DE BREVET EUROPEEN

(11) **EP 4 696 606 B1**
(45) Date de publication et mention de la délivrance du brevet: **23.09.2026**
(21) Numéro de dépôt: 25190995.8
(22) Date de dépôt: 22.07.2025
(51) Int. Cl.: B64D 37/30, B64D 37/32, A62C 3/08

(54) **INSTALLATION POUR AÉRONEF COMPORTANT UNE STRUCTURE DÉLIMITANT UN VOLUME AVEC UN POINT HAUT ET UN ÉLÉMENT CONTENANT DU DIHYDROGÈNE**
FLUGZEUGANLAGE MIT EINER STRUKTUR, WELCHE EIN VOLUMEN BEGRENZT MIT EINEM OBEREN PUNKT UND EINEM WASSERSTOFFFÜHRENDEM ELEMENT
AIRCRAFT INSTALLATION COMPRISING A STRUCTURE DEFINING AN INTERNAL VOLUME WITH A HIGH POINT AND AN ELEMENT CONTAINING DIHYDROGEN

(30) Priorité: 14.08.2024 FR 2408910
(43) Date de publication de la demande: 18.02.2026
(73) Titulaire: Airbus (S.A.S.), 31700 Blagnac (FR); AIRBUS OPERATIONS (S.A.S.), 31060 Toulouse (FR)
(72) Inventeur: CZAPLA, Lionel, 31060 TOULOUSE (FR); LANDOLT, Jonathan, 31700 BLAGNAC (FR)
(74) Mandataire: Airbus-OPS SAS

(56) Documents cités:
- JP-B2- 6 772 467
- US-A1- 2014 255 733
- US-A1- 2023 170 504

## Description

### DOMAINE TECHNIQUE

L'invention concerne le domaine des aéronefs dans lequel est agencé un circuit de canalisations, de pompes, de réservoirs, etc pour du dihydrogène. L'invention concerne plus particulièrement une installation comportant une structure qui délimite un volume dans lequel est disposé un élément contenant du dihydrogène et où, dans le volume, est agencé un matériau catalyseur d'une réaction d'oxydation du dihydrogène avec l'air ambiant pour oxyder du dihydrogène. L'invention concerne également un aéronef comportant au moins une telle installation.

### ÉTAT DE LA TECHNIQUE ANTÉRIEURE

D'une manière connue, le dihydrogène peut constituer une alternative au pétrole dans la propulsion des véhicules, en particulier des aéronefs. À cette fin, un aéronef comporte un réservoir de dihydrogène qui alimente une pile à combustible pour générer de l'électricité qui alimente un moteur électrique, ou directement un moteur consommant le dihydrogène. L'aéronef comporte alors un réseau de canalisations, de pompes et autres éléments dans lesquels passe le dihydrogène. Pour des raisons de sécurité et limiter les risques de fuites de dihydrogène, il est connu d'utiliser par exemple des canalisations à double peau.

Bien qu'un tel arrangement permette d'avoir un niveau de sécurité suffisant, il peut être utile de prévoir un autre arrangement qui limite les risques de concentrations de dihydrogène dans l'aéronef.

Les documents US2023/170504A1 et JP6772467B2 décrivent chacun une installation pour aéronef comportant un ensemble structurel de l'aéronef délimitant un volume avec un point haut, un contenant dans lequel du dihydrogène est présent et qui est arrangé dans le volume, et un catalyseur destiné à catalyser une réaction d'oxydation du dihydrogène avec l'air ambiant, où le catalyseur est fixé dans le volume au niveau du point haut.

### EXPOSÉ DE L'INVENTION

Un objet de la présente invention est de proposer une installation pour aéronef comportant une structure qui délimite un volume dans lequel est disposé un élément contenant du dihydrogène et où, dans le volume, est agencé un matériau catalyseur d'une réaction d'oxydation du dihydrogène avec l'air ambiant pour oxyder du dihydrogène.

À cet effet, est proposée une installation pour aéronef selon la revendication 1.

Avec un tel arrangement, le dihydrogène est consommé ce qui évite sa trop grande concentration.

Avantageusement, le volume présente un point bas et l'installation comporte au niveau du point bas, un canal d'assèchement arrangé à travers une paroi de l'ensemble structurel pour évacuer de l'eau liquide hors du volume.

Avantageusement, pour le ou chaque catalyseur, l'installation comporte un joint disposé autour du canal associé, entre le catalyseur et la paroi de l'ensemble structurel où est arrangé ledit canal.

Avantageusement, l'ensemble structurel est une portion d'une aile de l'aéronef.

Avantageusement, l'installation comporte pour le ou chaque catalyseur, un capteur de température arrangé pour mesurer la température dudit catalyseur.

L'invention propose également un aéronef comportant au moins une installation selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La figure 1 est une vue de face et en coupe d'un aéronef dans lequel une installation selon l'invention est mise en œuvre,
La figure 2 est une vue en coupe d'une installation non revendiquée,
La figure 3 est une vue en coupe d'une installation selon un mode de réalisation de l'invention,
La figure 4 est une vue de détail d'une mise en place d'un catalyseur, et
La figure 5 est une vue de détail d'une autre mise en place d'un catalyseur.

### EXPOSÉ DÉTAILLÉ DE MODES DE RÉALISATION

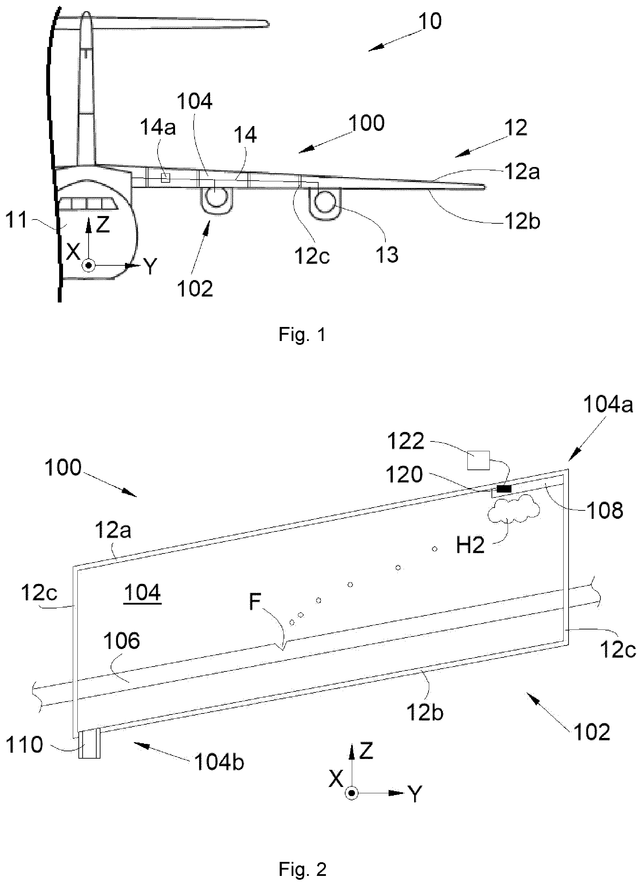

La figure 1 montre un aéronef 10 qui comporte un fuselage 11 et de part et d'autre du fuselage 11, une aile 12. L'aéronef 10 comporte des moteurs 13 qui sont alimentés en dihydrogène par des canalisations 14 depuis un réservoir de dihydrogène qui est disposé par exemple dans le fuselage 11.

Le dihydrogène est utilisé pour réaliser une combustion dans le moteur 13 ou pour alimenter une pile à combustible présente au voisinage du moteur 13 qui est alors alimenté en électricité depuis cette pile à combustible.

Pour permettre la fourniture de dihydrogène le long de l'aile 12 et jusqu'à chacun des moteurs 13, l'aéronef 10 comporte d'une manière générale des canalisations 14, des pompes 14a et tout autre dispositif nécessaire. Ces éléments sont par la suite appelés « contenants 106 » et dans chacun, du dihydrogène est présent.

L'aéronef 10 comporte une structure divisée en ensemble structurel 102. On appelle « ensemble structurel 102 » tout ensemble d'éléments de la structure de l'aéronef 10 qui délimite ensemble un volume 104 plus ou moins étanche au dihydrogène et qui, en tout cas, de par sa conception délimite un volume 104 dans lequel le dihydrogène peut s'accumuler. Un ensemble structurel 102 peut être par exemple un tronçon de l'aile 12 qui comporte une portion de la paroi d'extrados 12a, une portion de la paroi d'intrados 12b et des parois de traverse 12c qui sont fixées entre la paroi d'extrados 12a et la paroi d'intrados 12b. Ainsi, selon un mode de réalisation particulier, le volume 104 est entre la paroi d'extrados 12a, la paroi d'intrados 12b et deux parois de traverse 12c successives.

Un ensemble structurel peut être par exemple un tronçon du fuselage 11 qui comporte une peau intérieure, une peau extérieure et des poutres qui sont fixées entre la peau intérieure et la peau extérieure. Le volume 104 est alors entre la peau intérieure, la peau extérieure et deux poutres successives.

Bien sûr, tout autre partie de l'aéronef 10 dont des éléments de la structure délimitent un volume constitue également un ensemble structurel au sens de l'invention.

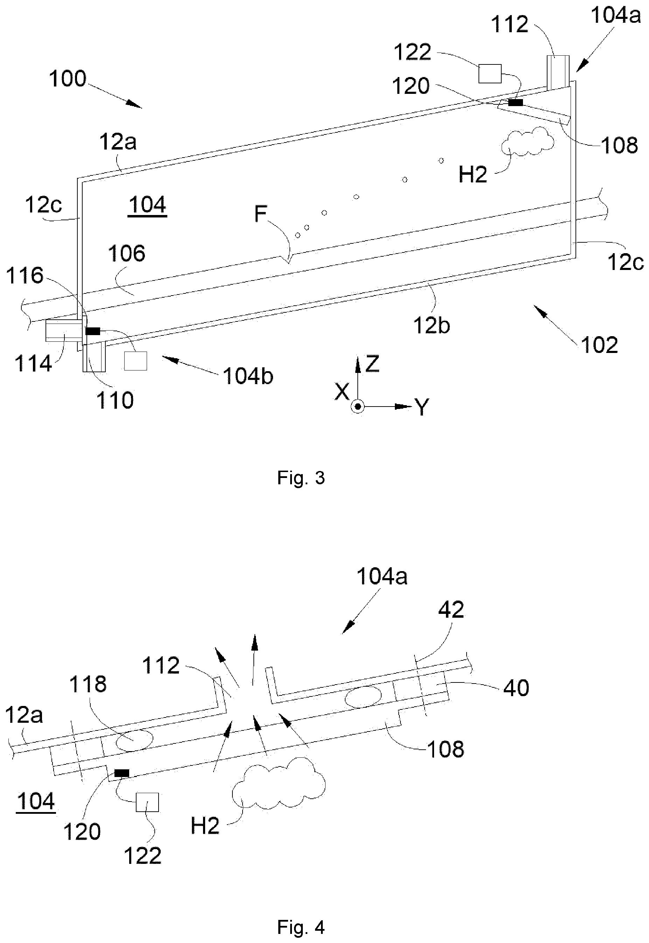

La figure 2 montre une installation 100 non revendiquée et la figure 3 montre une installation 100 selon un mode de réalisation de l'invention.

L'installation 100 comporte un ensemble structurel 102. Bien que ce mode de réalisation s'appuie sur un ensemble structurel 102 issu de l'aile 12, l'invention s'applique de la même manière à tout autre ensemble structurel. L'aéronef 10 peut avoir plusieurs installations 100 répartis à différents endroits.

L'installation 100 comporte également un contenant 106 qui est arrangé dans le volume 104, comme précisé ci-dessus, le contenant 106 peut être tout élément ou ensemble d'éléments contenant du dihydrogène.

Le volume 104 présente un point haut 104a au niveau duquel du dihydrogène H2 est susceptible de s'accumuler en cas de fuite F au niveau du contenant 106.

Pour limiter la concentration de dihydrogène au niveau du point haut 104a, l'installation 100 comporte un catalyseur 108 qui est destiné à catalyser une réaction d'oxydation du dihydrogène avec l'air ambiant. Le dihydrogène est ainsi oxydé pour former de l'eau. Afin de transformer le plus de dihydrogène possible, le catalyseur 108 est fixé dans le volume 104 au niveau du point haut 104a. La position du catalyseur 108 au niveau du point haut 104a est telle que le dihydrogène H2 accumulé entre forcément en contact avec le catalyseur 108. Le catalyseur 108 peut être agencé dans un mode de réalisation contre la paroi d'extrados 12a, et dans un deuxième mode de réalisation de l'invention, le catalyseur 108 est agencé contre la paroi d'extrados 12a et l'une des parois de traverse 12c. Le catalyseur 108 est par exemple constitué d'un support, comme une grille, une plaque, etc recouvert d'une substance catalytique adaptée comme de l'alumine et/ou de l'oxyde de cérium et/ou un platinoïde (platine, palladium, dioxyde de platine).

Selon la configuration de l'ensemble structurel 102, la consommation de dihydrogène et de dioxygène va entraîner une baisse de pression dans le volume 104 si celui-ci est hermétique mais le dioxygène sera remplacé si le volume 104 n'est pas hermétique. Mais dans tous les cas, la consommation du dihydrogène va diminuer sa proportion dans le volume 104.

Pour évacuer l'eau ainsi formée, un canal d'assèchement 110 peut être arrangé au niveau d'un point bas 104b du volume 104. Le canal d'assèchement 110 traverse ainsi une paroi de l'ensemble structurel 102, ici la paroi d'intrados 12b et assure l'évacuation de l'eau liquide hors du volume 104.

Pour favoriser le passage du dihydrogène H2 à travers le catalyseur 108, et ainsi améliorer le rendement de la conversion du dihydrogène, l'installation 100 comporte à travers une paroi de l'ensemble structurel 102, un canal d'évacuation 112 qui est arrangé au niveau du point haut 104a et derrière le catalyseur 108 par rapport au contenant 106.

Le passage à travers le catalyseur 108 est favorisé lorsque celui-ci est perméable aux gaz et prend par exemple la forme d'une grille sur laquelle la substance catalytique est déposée.

Le canal d'évacuation 112 traverse ici la paroi d'extrados 12a mais elle pourrait également traverser la paroi de traverse 12c.

En complément, pour améliorer l'arrivée de dioxygène dans le volume 104 lorsque celui-ci est trop étanche, l'installation 100 comporte à travers une paroi de l'ensemble structurel 102, un canal d'introduction 114 qui permet d'introduire de l'air dans le volume 104.

Le canal d'introduction 114 traverse la paroi de traverse 12c, mais il peut traverser tout autre paroi du moment que l'air peut y arriver. De la même manière, le canal d'introduction 114 est ici au niveau du point bas 104b, mais il peut être à un autre endroit.

Du fait des mouvements de l'aéronef 10 durant un vol, ainsi que des différences de pression entre le volume 104 et l'extérieur de l'ensemble structurel 102, de l'air et/ou du dihydrogène peut être amené à sortir du volume 104 par le canal d'introduction 114.

Pour que le dihydrogène sortant du volume 104 par le canal d'introduction 114 soit également transformé, l'installation 100 comporte un catalyseur additionnel 116 destiné à catalyser une réaction d'oxydation du dihydrogène avec l'air ambiant. Ce catalyseur additionnel 116 est fixé dans le volume 104 entre le canal d'introduction 114 et le contenant 106.

Le catalyseur additionnel 116 peut prendre la même forme et la même composition que le catalyseur 108.

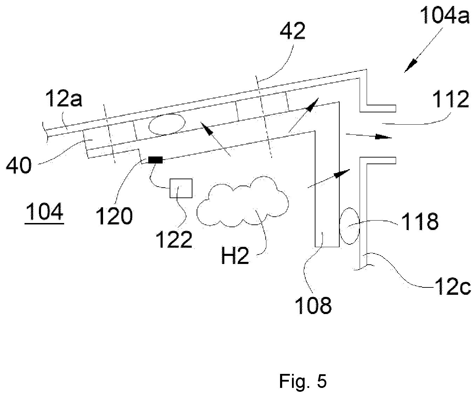

Les Figs. 4 et 5 montrent deux exemples de mise en place d'un catalyseur 108. Dans l'exemple de la figure 4, le catalyseur 108 est mis en place au niveau d'une paroi, par exemple ici au niveau de la paroi d'extrados 12a. Dans l'exemple de la figure 5, le catalyseur 108 est mis en place au niveau d'un coin entre deux parois, par exemple ici entre la paroi d'extrados 12a et la paroi de traverse 12c.

Dans chaque mise en place, le catalyseur 108 est fixé à une ou plusieurs parois 12a, 12c et à distance de ces parois 12a, 12c par l'intermédiaire d'entretoises 40. La fixation est complétée ici par des vis de maintien 42 mais tout autre dispositif de fixation est possible.

Pour forcer le dihydrogène à passer à travers le catalyseur 108 perméable aux gaz et atteindre le canal d'évacuation 112, l'installation 100 comporte un joint 118, par exemple un joint torique, qui est disposé autour du canal d'évacuation 112. Ce joint 118 est disposé entre le catalyseur 108 et la paroi d'extrados 12a dans le cas de la figure 4 et les parois d'extrados 12a et de traverse 12c dans le cas de la figure 5, c'est-à-dire les parois de l'ensemble structurel 102 où est arrangé le canal d'évacuation 112.

Bien que sur les exemples des Figs. 4 et 5, c'est le catalyseur 108 qui est présenté, ils s'appliquent de la même manière au catalyseur additionnel 116 et au canal d'introduction 114 associé.

La température du catalyseur 108, 116 est fonction entre autres de la quantité de dihydrogène qui a été oxydé du fait que cette réaction d'oxydation est exothermique. Ainsi en surveillant la température de chaque catalyseur 108, 116 de l'aéronef 10, il est possible de présumer de la présence ou non de dihydrogène au niveau de chaque catalyseur 108, 116.

À cette fin, l'installation 100 comporte pour chaque catalyseur 108, 116, un capteur de température 120, par exemple un thermocouple, qui est monté par exemple contre le catalyseur 108, 116 et qui mesure la température dudit catalyseur 108, 116.

Cette information est ensuite transmise à une unité de contrôle 122 qui en fonction de l'information reçue et en la comparant à un intervalle de température référence, peut déduire de la présence ou non de dihydrogène au niveau de chaque catalyseur 108, 116. À partir de là, il peut informer le personnel d'une possible fuite F de dihydrogène dans l'aéronef 10.

L'unité de contrôle 122 constitue une plateforme matérielle qui présente, reliés par un bus de communication : un processeur ou CPU (« Central Processing Unit » en anglais), une mémoire vive RAM (« Read-Only Memory » en anglais), une mémoire morte, par exemple de type ROM (« Read Only Memory » en anglais) ou EEPROM (« Electrically-Erasable Programmable ROM » en anglais), une unité de stockage, telle qu'un disque dur HDD (« Hard Disk Drive » en anglais), ou un lecteur de support de stockage, tel qu'un lecteur de cartes SD (« Secure Digital » en anglais), et un gestionnaire d'interfaces en liaison avec chaque capteur de température 120 et une interface de communication avec le personnel. Le processeur est capable d'exécuter des instructions chargées dans la mémoire vive à partir de la mémoire morte, d'une mémoire externe, d'un support de stockage (tel qu'une carte SD), ou d'un réseau de communication. Lorsque l'unité de contrôle 122 est mise sous tension, le processeur est capable de lire de la mémoire vive des instructions et de les exécuter. Ces instructions forment un programme d'ordinateur causant l'implémentation, par le processeur, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, la plateforme matérielle comporte de la circuiterie électronique adaptée et configurée pour implémenter les fonctionnements et étapes décrits ici.

## Revendications

1. Installation (100) pour aéronef (10), ladite installation (100) comportant :
- un ensemble structurel (102) de l'aéronef (10) délimitant un volume (104) avec un point haut (104a),
- un contenant (106) dans lequel du dihydrogène est présent et qui est arrangé dans le volume (104), et
- un catalyseur (108) destiné à catalyser une réaction d'oxydation du dihydrogène avec l'air ambiant, où le catalyseur (108) est fixé dans le volume (104) au niveau du point haut (104a), l'installation comportant à travers une paroi de l'ensemble structurel (102) :
- un canal d'évacuation (112) arrangé au niveau du point haut (104a) derrière le catalyseur (108) par rapport au contenant (106) ; et
- un canal d'introduction (114) arrangé pour introduire de l'air dans le volume (104),
**caractérisée en ce qu'**elle comporte un catalyseur additionnel (116) destiné à catalyser une réaction d'oxydation du dihydrogène avec l'air ambiant, où le catalyseur additionnel (116) est fixé dans le volume (104) entre le canal d'introduction (114) et le contenant (106), à l'entrée du canal d'introduction (114) dans le volume (104).

2. Installation (100) selon la revendication 1, **caractérisée en ce que** le volume (104) présente un point bas (104b) et **en ce que** l'installation (100) comporte au niveau du point bas (104b), un canal d'assèchement (110) arrangé à travers une paroi de l'ensemble structurel (102) pour évacuer de l'eau liquide hors du volume (104).

3. Installation (100) selon l'une des revendications 1 ou 2, **caractérisée en ce que** pour le ou chaque catalyseur (108, 116), l'installation (100) comporte un joint (118) disposé autour du canal (112, 114) associé, entre le catalyseur (108, 116) et la paroi de l'ensemble structurel (102) où est arrangé ledit canal (112, 114).

4. Installation (100) selon l'une des revendications précédentes, **caractérisée en ce que** l'ensemble structurel (102) est une portion d'une aile (12) de l'aéronef (10).

5. Installation (100) selon l'une des revendications précédentes, **caractérisée en ce qu'**elle comporte pour le ou chaque catalyseur (108, 116), un capteur de température (120) arrangé pour mesurer la température dudit catalyseur (108, 116).

6. Aéronef (10) comportant au moins une installation (100) selon l'une des revendications précédentes.

## Patentansprüche

1. Anlage (100) für ein Luftfahrzeug (10), die Anlage (100) umfassend:
- eine strukturelle Einheit (102) des Luftfahrzeugs (10), die ein Volumen (104) mit einem Hochpunkt (104a) begrenzt,
- ein Behältnis (106), in dem sich Wasserstoff befindet und das in dem Volumen (104) eingerichtet ist, und
- einen Katalysator (108), der dazu bestimmt ist, eine Oxidationsreaktion des Wasserstoffs mit der Umgebungsluft zu katalysieren, wobei der Katalysator (108) in dem Volumen (104) an dem Hochpunkt (104a) befestigt ist,
wobei die Anlage durch eine Wand der strukturellen Einheit (102) hindurch umfasst:
- einen Abführkanal (112), der an dem Hochpunkt (104a) hinter dem Katalysator (108) in Bezug auf das Behältnis (106) eingerichtet ist; und
- einen Einleitungskanal (114), der dazu eingerichtet ist, Luft in das Volumen (104) einzuleiten,
**dadurch gekennzeichnet, dass** sie einen zusätzlichen Katalysator (116) umfasst, der dazu bestimmt ist, eine Oxidationsreaktion des Wasserstoffs mit der Umgebungsluft zu katalysieren, wobei der zusätzliche Katalysator (116) in dem Volumen (104) zwischen dem Einleitungskanal (114) und dem Behältnis (106) am Einlass des Einleitungskanals (114) in das Volumen (104) befestigt ist.

2. Anlage (100) nach Anspruch 1, **dadurch gekennzeichnet, dass** das Volumen (104) einen Tiefpunkt (104b) aufweist und dass die Anlage (100) an dem Tiefpunkt (104b) einen Entwässerungskanal (110) umfasst, der durch eine Wand der strukturellen Einheit (102) hindurch eingerichtet ist, um flüssiges Wasser aus dem Volumen (104) abzuführen.

3. Anlage (100) nach einem der Ansprüche 1 oder 2, **dadurch gekennzeichnet, dass** die Anlage (100) für den oder jeden Katalysator (108, 116) eine um den zugehörigen Kanal (112, 114) herum angeordnete Dichtung (118) zwischen dem Katalysator (108, 116) und der Wand der strukturellen Einheit (102), wo der Kanal (112, 114) eingerichtet ist, umfasst.

4. Anlage (100) nach einem der vorhergehenden Ansprüche, **dadurch gekennzeichnet, dass** die strukturelle Einheit (102) ein Abschnitt einer Tragfläche (12) des Luftfahrzeugs (10) ist.

5. Anlage (100) nach einem der vorhergehenden Ansprüche, **dadurch gekennzeichnet, dass** sie für den oder jeden Katalysator (108, 116) einen Temperatursensor (120) umfasst, der dazu eingerichtet ist, die Temperatur des Katalysators (108, 116) zu messen.

6. Luftfahrzeug (10), das mindestens eine Anlage (100) nach einem der vorhergehenden Ansprüche umfasst.

## Claims

1. Installation (100) for an aircraft (10), said installation (100) having:
- a structural assembly (102) of the aircraft (10) delimiting a volume (104) with a high point (104a),
- a container (106) in which dihydrogen is present and which is arranged in the volume (104), and
- a catalyser (108) intended to catalyse an oxidation reaction of the dihydrogen with the ambient air, wherein the catalyser (108) is fastened in the volume (104) at the high point (104a),
the installation having, through a wall of the structural assembly (102):
- an evacuation channel (112) arranged at the high point (104a) behind the catalyser (108) with respect to the container (106); and
- an introduction channel (114) arranged to introduce air into the volume (104),
**characterized in that** it has an additional catalyser (116) intended to catalyse an oxidation reaction of the dihydrogen with the ambient air, where the additional catalyser (116) is fastened in the volume (104) between the introduction channel (114) and the container (106), at the inlet to the introduction channel (114) leading into the volume (104).

2. Installation (100) according to Claim 1, **characterized in that** the volume (104) has a low point (104b) and **in that** the installation (100) has, at the low point (104b), a drying-out channel (110) arranged through a wall of the structural assembly (102) to evacuate liquid water from the volume (104).

3. Installation (100) according to either of Claims 1 and 2, **characterized in that**, for the or each catalyser (108, 116), the installation (100) has a seal (118) disposed around the associated channel (112, 114), between the catalyser (108, 116) and the wall of the structural assembly (102) where said channel (112, 114) is arranged.

4. Installation (100) according to one of the preceding claims, **characterized in that** the structural assembly (102) is a portion of a wing (12) of the aircraft (10).

5. Installation (100) according to one of the preceding claims, **characterized in that** it has, for the or each catalyser (108, 116), a temperature sensor (120) arranged to measure the temperature of said catalyser (108, 116).

6. Aircraft (10) having at least one installation (100) according to one of the preceding claims.
